# EUROPEAN PATENT APPLICATION

(11) **EP 0 987 665 A2**
(43) Date of publication of application: **22.03.2000**
(21) Application number: 99305835.3
(22) Date of filing: 23.07.1999
(51) Int. Cl.: G08G 1/0968

(54) **Vehicle navigation system, method and apparatus**

(30) Priority: 30.07.1998 US 126933
(71) Applicant: Visteon Technologies, LLC, Dearborn, MI 48126 (US)
(72) Inventor: White, Laura L.,, San Jose, California 95129 (US); Hlivka III, Peter, Richmond, California 94805 (US)
(74) Representative: Orchard, Oliver John

(57) **Abstract**

A method for generating a "fastest" route in a vehicle navigation system includes: (i) receiving a broadcast signal that provides actual speed data for a plurality of road segments, each of the plurality of road segments having a length and selected ones of the plurality of road segments being combined to form at least part of a plurality of routes from a position to a destination; (ii) generating the plurality of routes using the actual speed data; (iii) determining the travel time for each of the plurality of routes using the actual speed data; and (iv) selecting the fastest route from the plurality of routes based at least in part on the travel times.

## Description

The present invention relates to vehicle navigation using real-time traffic data. In a particular arrangement to be described below, by way of example in illustration of the present invention, the provision is described of at least one new fastest route in the light of dynamically changing traffic conditions using broadcast real-time traffic data.

A vehicle navigation system implemented in a vehicle may attempt to assist a driver or a user to find the fastest route from a current position of the vehicle to a given destination. The term "fastest route," as used in connection with the description of this invention refers to a route that is travelled in the least amount of time to reach a selected destination. Such systems are particularly useful when unanticipated road incidents, such as road closures, traffic congestion, accidents, detours, police activities or emergency phone report incidents, etc. impede the flow of traffic. In the presence of such road incidents, a route that was deemed to be the fastest when the vehicle began from its point of origin, for example, may no longer be the fastest route. To this end, the vehicle navigation system may attempt to provide the user with a new fastest route that accounts for the presence of road incidents such as those mentioned above.

One approach to providing the fastest route to a selected destination in the presence of such above-mentioned road incidents is set forth in US Patent No.5,689,252 to Ayanoglu et al (hereinafter referred to as "Ayanoglu"). According to this approach, after the user inputs his starting position and destination, a vehicle navigation system determines the available routes of travel and provides the user with at least one route that is the fastest route to the destination. The available routes of travel, from which the fastest route is selected, are calculated using a posted speed limit of the possible routes that may be stored in the vehicle navigation system's database. As the vehicle proceeds on the fastest route towards the intended destination, the presence of unanticipated road incidents on the fastest route or other neighbouring routes may impede the flow of traffic, making the previously considered fastest route no longer the "fastest." In order to circumvent such road incidents, the vehicle navigation system in this approach attempts to provide the user with a new fastest route as described hereinafter.

According to Ayanoglu, the difference between the actual average speed and the posted speed limit for each of the available routes of travel is monitored and broadcast by a central database to the vehicle navigation system. It is important to keep in mind that the available routes of travel were determined initially when the user provided the vehicle navigation system with the vehicle's position and intended destination. The actual average speed of traffic on the available routes of travel is provided to the central database and may be calculated using human observation or actual electronic road measurement devices. By monitoring the difference in actual average speed and the posted speed limit as described above, the vehicle navigation system described by Ayanoglu attempts to provide the user with a new fastest route from the available routes of travel.

Unfortunately, the previously proposed vehicle navigation systems, such as the one described by Ayanoglu, may fail to provide a new fastest route that is indeed the fastest route to the destination. Stated another way, the new fastest route provided by the previously proposed systems may not be the route (selected from the available routes of travel) that requires the least amount of time to reach the selected destination. The above-described vehicle navigation system, for example, is confined to the selection of a new fastest route from the available routes of travel that were determined initially and due to the presence of unanticipated road incidents, these available routes may no longer include a correct new fastest route. The dynamically changing traffic conditions may call for the determination of a new set of available routes of travel that account for the presence of unanticipated road incidents and the old available routes of travel that were determined initially may no longer accurately reflect the list of all available routes of travel to the destination. Specifically, the old list of available routes of travel may not include a route that is truly the fastest route to the destination.

Furthermore, the previously proposed vehicle navigation systems, such as the one described by Ayanoglu, may also fail accurately to determine the estimated time of arrival on a certain route. By way of example, Ayanoqlu teaches the conversion of a road map into a data structure of the actual average speed and the length of each available route of travel and then the calculation of an estimated time of arrival for a route of travel using the actual average speed and length of that route. This approach, however, fails to account for the fact that the actual speed on each of the various road segments, which combine to form a route of travel, may be different and that a single average speed of a route may not be an accurate representation of the actual speed on the different road segments that form that route. The actual speed of a route may significantly vary from one road segment to another when there is an unanticipated road incident present on one link and not on another link. Links typically include a combination of road segments and constitute a part of a route.

A vehicle navigation system and a process to be described below, by way of example in illustration of the invention use broadcast real-time traffic data to provide a fastest route from a position to a destination and an estimated time of arrival to the selected destination on the fastest or any other route.

Arrangements to be described below, by way of example in illustration of the present invention includes a vehicle navigation system and a method for generating a fastest route. One method to be described includes: (i) receiving a broadcast signal that provides actual speed data for a plurality of road segments, each of the plurality of road segments having a length and selected ones of the plurality of road segments combining to form at least part of a plurality of routes from a position to a destination; (ii) generating the plurality of routes using the actual speed data; (iii) determining a travel time for each of the plurality of routes using the actual speed data; and (iv) selecting the fastest route from the plurality of routes based at least in part on the travel times.

This arrangement provides the flexibility of generating several routes of travel that are based on actual speed data or real-time traffic data. Consequently, the determination of a new fastest route, which is selected from the several routes of travel, accurately accounts for the current state of traffic. Furthermore, the computation of travel time on the new fastest route to the destination is also accurate as it is generated using actual speed data. It is important to bear in mind that the previously proposed methods do not use actual speed data to calculate possible routes of travel. Rather the previously proposed methods attempt to determine the new fastest route using the available routes of travel that were determined initially at or near the time of departure from the point of origin. As mentioned before, in the light of the dynamically changing traffic conditions, the available routes of travel that were calculated initially may no longer include a route that is truly the fastest route to the destination.

In another arrangement to be described which is illustrative of the present invention there is a vehicle navigation system and a method for generating an estimated time of arrival for a route that originates from a position and ends at a destination. The method of this arrangement to be described includes: (i) receiving a broadcast signal that provides actual speed data for a plurality of road segments, each of the road segments having a length, and selected ones of the plurality of road segments combining to form the route; and (ii) generating the estimated time of arrival for the route using the length and the actual speed data associated with the selected road segments.

In this another arrangement, the user is provided with an estimated time of arrival, which is computed using actual speed data and therefore provides an accurate time of travel to the destination. As mentioned before, the prior proposal does not use actual speed data to calculate the estimated time of arrival. Rather the prior proposal uses an actual average speed of the entire route to calculate the estimated time of arrival. Consequently, the prior proposal may erroneously rule out a truly fastest route of travel, because an irrelevant portion of that route, which portion has already been travelled on, has an anticipated road incident that lowers the actual average speed of that entire route. It should be borne in mind, that arrangements illustrative of the present invention use the actual speed data for the various road segments from the vehicle's current position to the destination and, therefore, the road segments that have already been travelled on are no longer relevant to the generation of possible routes of travel.

In yet another arrangement illustrative of the present invention there is a vehicle navigation system and a method for updating an initial estimated time of arrival for a route that connects an initial position to a destination. The method includes: (i) providing the initial estimated time of arrival for the route, the initial estimated time of arrival being derived from the initial position and actual speed data associated with a plurality of road segments that form the route; (ii) receiving a broadcast signal that provides new actual speed data for at least some of the plurality of road segments, each of the road segments having a length; and modifying the initial estimated time of arrival based on a current vehicle position and the new actual speed data. The estimated time of arrival that was determined initially at or near the time of departure from the initial position in this yet another arrangement is updated according to real-time traffic data. The vehicle navigation system user is apprised of the estimated time of arrival that precisely accounts for the current state of traffic and/or road incidents on that route.

The following description and drawings disclose, by means of examples, the invention which is characterised in the appended claims, whose terms determine the extent of the protection conferred hereby.

In the drawings:-
Fig. 1 illustrates diagrammatically a traffic management centre in communication with a navigation system;
Fig. 2 is a block schematic diagram of a vehicle navigation system for use with the present invention;
Fig. 3 shows the different layers of messages that form a communication protocol during communication between the traffic management centre and the navigation system of Fig. 1;
Fig. 4 is a diagram which serves to illustrate the route generation methodology employed by a vehicle navigation system designed according to a specific embodiment illustrative of the invention;
Figs. 5A and 5B are diagrams illustrating the dynamic adjustment of segment costs;
Figure 6 is a flowchart for use in describing a process for updating, according to one embodiment illustrative of the present invention, real-time traffic data as it is received by the vehicle navigation unit of Figure 2;
Figure 7 is a flowchart for use in describing a process for generating, according to one embodiment illustrative of the present invention, a map display that apprises a user of the broadcast real-time traffic data; and
Figures 8A-8C constitute a flowchart of a process for determining, according to one embodiment illustrative of the present invention, the estimated time of arrival and delay based on broadcast real-time traffic data.

It will be understood that there will be described, by way of example in illustration of the present invention a vehicle navigation system and a method of operation that use real-time traffic broadcast data to provide a new fastest route under dynamically changing traffic conditions. In the following description, numerous specific details are set forth by way of example in order to provide a thorough understanding of the present invention. It will be apparent, however, to those skilled in the art, that the present invention may be practised without some or all of the specific details.

### In-Vehicle Navigation Environment

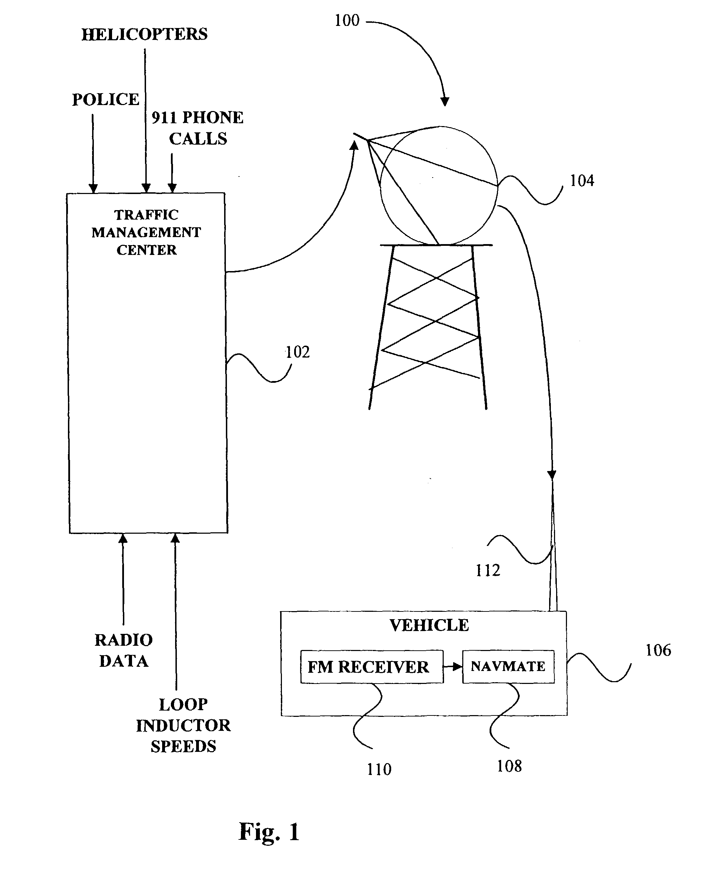

Figure 1 shows a traffic management centre 102 in communication with a vehicle navigation system 108 (referred to as "NAVMATE" in Figure 1). Traffic management centre 102 receives and disseminates, through a transmitter 104, real-time traffic data to drivers. Several sources feed traffic management centre 102 with real-time traffic data. By way of example, traffic incident information collected by the local police department, helicopters and local radio stations, actual highway speed and arterial traffic speed collected by helicopters and loop inductors and 911 phone calls, etc. are reported to traffic management centre 102.

An interface computer (not shown to simplify illustration) located at traffic management centre 102 processes the reported real-time traffic data and formats them into messages that are communicated to transmitter 104 via a dial-up modem connection or a satellite link. Transmitter 104 resides in either the studio or the transmitter room of an FM radio station, for example. In one embodiment illustrative of the present invention, the messages formatted by the interface computer are encoded into a baseband signal, which will be modulated and broadcast as a sub-carrier to the FM radio signal.

Transmitter 104 may be a sub-carrier traffic information channel (STIC) transmitter (hereinafter referred to as a "STIC transmitter" to facilitate discussion) It is important to note, however, that in another embodiment transmitter 104 could communicate in Radio (Broadcast) Data System or other protocols. The STIC transmitter is capable of broadcasting real-time traffic data at a rate of between about 7600 bps and about 9600 bps. A receiver 110 installed along with vehicle navigation system 108 in a vehicle 106 is configured to receive the real-time traffic data from transmitter 104 through an antenna 112. By way of example, receiver 110 may be a STIC receiver that is capable of receiving broadcast data from the STIC transmitter. The real-time traffic data is then decoded by the FM receiver and passed to vehicle navigation system 108 over a serial data link. In yet another illustrative embodiment, instead of a transmitter, real-time traffic data may be conveyed to the user by satellite or cellular technology. Vehicle navigation system 108 incorporates the real-time traffic data contained in the received messages into a memory storage area. Furthermore, vehicle navigation system 108 is capable of displaying the real-time traffic information along with other pertinent data stored in the map database to the driver or passenger of vehicle 106. As will be explained later, vehicle navigation system 108 will also calculate and display the quickest route to a selected destination using the real-time traffic data mentioned above.

### Vehicle Navigation System

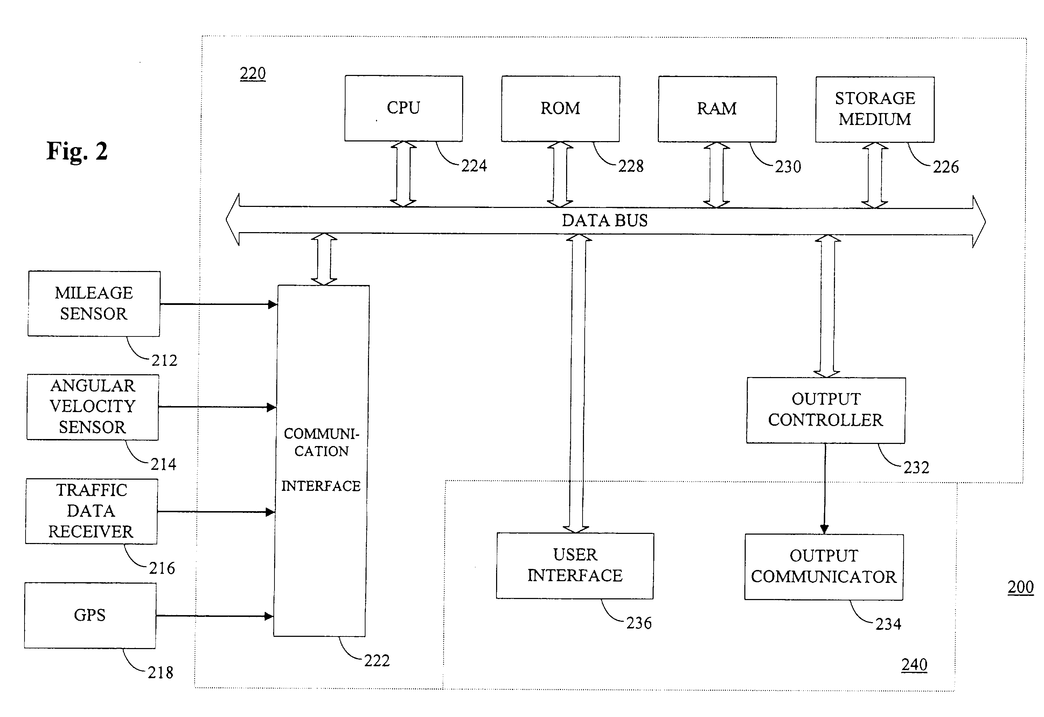

Fig. 2 is a block diagram of a specific embodiment of a vehicle navigation system 200 for use with the present invention. Sensors 212 and 214, receiver 216 and GPS receiver 218 are coupled to computing means 220 through communication interface 222. In typical embodiments, mileage sensor 212 includes an odometer, and angular velocity sensor 214 includes a gyroscope, or a differential odometer coupled to the wheels of the vehicle. A global positioning system (GPS) data receiver 218 is provided for receiving signals from, for example, a satellite-based positioning system. Data from communication interface 222 is transmitted to CPU 224, which performs calibration, signal processing, dead-reckoning, vehicle positioning, and route guidance functions. A database containing map information may be stored in database medium 226, with software directing the operation of computing means 220 stored in main memory 228 for execution by CPU 224. Memory 228 may include a read-only memory (ROM), or a reprogrammable non-volatile memory such as flash memory or SRAM. System RAM 230 permits reading and writing of the information necessary to execute such software programs. Database medium 226 may be a non-volatile memory, a hard disk dive, CD-ROM, or an integrated circuit in which digitized map information has been stored. Output controller 232, which may include a graphics controller, receives data processed by CPU 224 and transmits the data to display console 240 which includes output communicator 234, usually comprising a display screen. The user may input data, such as a desired destination, through user interface 236, typically a keyboard.

The map database stored in database medium 226 preferably includes positional data such as, for example, latitude and longitude coordinates, to describe road intersections or nodes, road segments, landmarks and points of interest, and other geographical information. The database may further include data representing characteristics of roads or places on the map, such as road and place names, road features such as dividers, one-way restrictions, surface, speed limit, shape, elevation, and other properties. In specific arrangements illustrative of the invention, the map database includes cost values associated with individual nodes and road segments. These cost values correspond to the estimates of time intervals for traversing the respective node or segment. Node cost values take into consideration such information as, for example, whether the vehicle would encounter oncoming traffic, thus delaying a left turn manoeuvre. Segment costs reflect road segment characteristics such as a speed limit and a segment length, both of which affect the travel time along the segment. Also associated with each road in the map database is a hierarchy value, which relates to the category or type of the road. For example, the highest level category of the hierarchy includes freeways and expressways. The lowest level includes residential streets and/or alleys.

### Communication Protocol

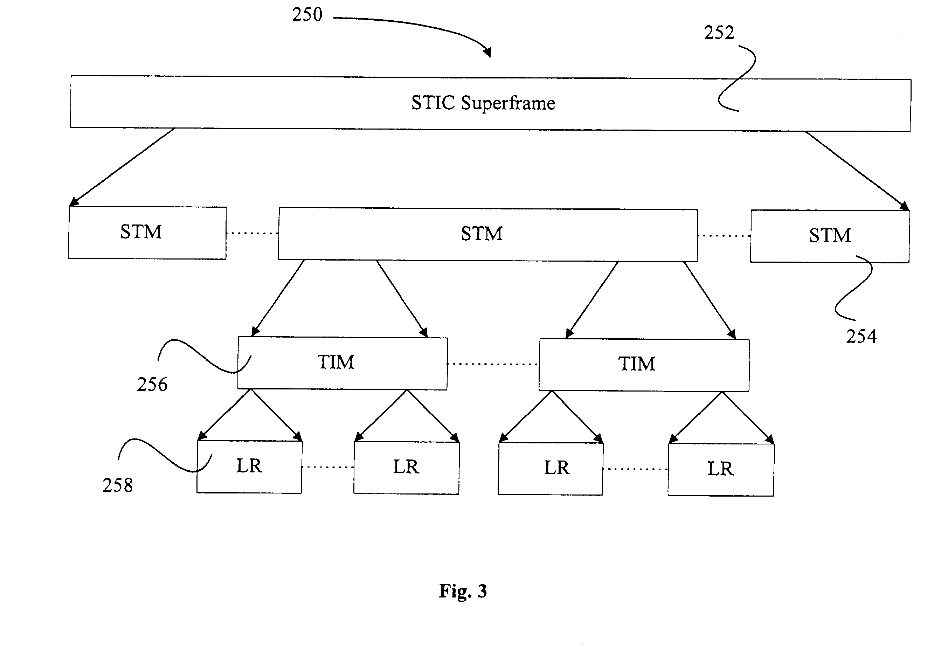

Figure 3 illustrates messaging layers 250, in one arrangement illustrative of the present invention, that are involved in the communication protocol between transmitter 104 and vehicle navigation system 108 shown in Figure 1. As shown in Figure 3, location references (LRs) 258 are embedded in real-time traffic information messages (TIMs) 256, which are in turn embedded into STIC transmission messages (STMs) 254, which are further in turn embedded into a STIC superframe 252.

The various layers in messaging layers 250 may be formatted according to any known or developing standard. By way of example, messaging layers may be formatted according to three developing national standards described below. The format of traffic information messages 256 (TIMs) may be based upon the Society of Automotive Engineers (SAE) Draft Recommended Practice J2256 and the ISO Draft Recommended Practice TC 204 WG 11.1. The location reference (LR) formats may be based upon Location Reference Message Specification (LRMS) developed at Oak Ridge National Laboratory SAE Draft J-2374 Location Referencing Message Specification. All three of these standards documents are incorporated herein by reference in their entirety for all purposes.

STIC superframe (hereinafter referred to as "superframe") 252 may be a 65 kilobyte message, which is cyclically broadcast by a STIC message encoder that is located at the FM broadcast station, for example, and the contents of the superframe are periodically rebroadcast. The interface computer mentioned above controls the format and content of the 65 kilobytes in the superframe. By way of example, the interface computer may format the data in the superframe using the STM, TIM, and LR formats and overwrite the contents of the superframe periodically in order to update the traffic information.

Before the superframe is broadcast by transmitter 104 as mentioned above, it is encoded by the STIC message encoder. The processing of the superframe begins, for example, when the STIC message encoder subdivides the data in the STIC superframe into 228 byte blocks. The encoder attaches a 15 byte Reed-Soloman forward error correction code to each block, then randomizes the data and forward error correction codes using a prescribed algorithm. Finally, the encoder attaches a synchronization flag to the data and the entire package is broadcast.

Receiver 110 shown in Figure 1 searches the incoming bit stream for the synchronization flag sequence. Chances of this sequence being duplicated by the data is minimized by the randomization procedure. Using the flag, receiver 110 synchronizes to the incoming bit stream and de-randomizes the broadcast data. Next, receiver 110 uses the forward error correction codes to correct up to seven byte errors in any single 228 byte block. The receiver may finally remove the superframe flag and forward error correction codes before outputting the superframe data.

The STIC Transmission Message (STM) provides a frame structure for the traffic information messages (TIMs). The STM may include a flag, byte count, sequence number, traffic information messages, and checksum. The flag, byte count, sequence number, and cyclic redundancy check (CRC) fields of the STM may each contain a binary numeric value. The first data bit in each of these fields is the most significant bit of the number represented. The STM flag is a fixed bit pattern, which is used to synchronize the receiving device to the broadcast data stream. Referring to Figure 1, vehicle navigation unit 108 receives a continuous and undelimited data stream from receiver 110. Vehicle navigation unit 108 then searches for the STM flag pattern and thereafter identifies the first byte of the STM.

A byte count field indicates the total number of bytes in the STM including the flag and cyclic redundancy check (CRC). Vehicle navigation unit 108 uses the byte count to locate the end of the STM and isolate the CRC. A "normal" length can be arbitrarily chosen and this length is used to verify that the byte count is valid. If the byte count is outside the "normal" range then the STIC message is deemed invalid and the start of the next "STIC" message is checked to determine the actual length. Valid values of the byte count reveal that the STM has a minimum length of 9 bytes and a maximum length of 65,535 bytes. The STM lengths of 9 or 65,535 bytes are allowed by the STM format but are not recommended for normal use. A 9 byte long STM contains no information and is, therefore, useless. The STM preferably contains at least one TIM. A 65,535 byte long STM is also undesirable because as the STM length increases, the probability of errors in the STM and the amount of data loss with each error also increases. If vehicle navigation unit 108 receives an invalid checksum in the STM, the vehicle navigation unit discards all the data in the STM. As the length of the STM increases, so does the probability of errors in the STM and the amount of data loss with each error also increases.

The sequence number uniquely identifies each STM and is used by vehicle navigation unit 108 to filter out previously received messages. Such filtering represents one of the many advantages offered by the present invention as it helps vehicle navigation unit 108 to reduce the computational overhead associated with processing STMs.

TIMs are encoded into a variable length data field and are described below. The length of the data field is determined by the number of TIMs and the length of each TIM is included in the STM. For the above-mentioned reasons, the number and length of TIMs included in each STM is carefully chosen by the interface computer in order to reach a desirable STM length.

The checksum is a 16 bit binary CRC code. The CRC is intended to be a means of error detection not error correction. The STM message format relies on the extensive forward error correction of the STIC system for recovering lost data.

Referring to Figure 3, TIMs 256 contains real time traffic data coupled with LRs 258. By way of example, the interface computer generates TlMs that include link data TIM, incident report TIM and advisory TIM. The link data TIM format is based upon the format of message number 1 L of the SAE/ISO messaging standards mentioned above, for example. The link data TIM primarily contains real time traffic information, e.g., travel speed, travel time, actual to normal speed ratios, congestion levels, and the like, for segments of a roadway.

The incident report TIM contains information about the location and severity of traffic incidents that occur on the roadway. The incident report TIM format is based upon the format of message number 24L of the SAE/ISO messaging standards, for example.

The advisory TIM contains advisory messages regarding traffic, weather or other events. The advisory TIM format is based upon the format of the message number 15L of the SAE/ISO messaging standards, for example.

An LR contains information that identifies either a geographic point on a roadway or a segment of roadway, which joins two points. Various types of LRs that are generated by the interface computer include globally referenced point, globally referenced link, locally referenced point, locally referenced link, location referenced header.

LRs that identify a point contain one coordinate and LRs that identify a link contain two coordinates. In either case, the coordinates are specified as geographic latitude, longitude, and altitude.

The order of the coordinates in an LR that identify a link indicate the direction of travel on that link. By way of example, two links for a segment of highway, which has traffic travelling in two directions, may share the same endpoints; the order of their endpoints, however, uniquely identify a particular link.

An LR generated by the interface computer may include a delta from an origin. TIMs that include LRs also include a location reference header, which contains the origin. The origin is a coordinate (e.g., latitude, longitude, and altitude) referenced to a geodetic datum. Subsequent locally referenced LRs in the same TIM contain coordinates as deviations from the origin which are referenced to the same datum. Street name information is included in any of the LRs. A flag in each location reference indicates the presence of name information, such as a street name prefix, a street name, a street type, etc.

The majority of information that is broadcast by traffic management centre 102 includes link speed data and point (incident) data (e.g., 911 phone calls, police activity in a parking lot, etc.). As mentioned above, link speed data may be broadcast using the link data TIMs. Link speed data is derived primarily from sensors and historical data. Sensors provide the travel speed data on highways and major arterial roads, for example. On uninstrumented roadways, historical data or predetermined speed data that varies with time of day and includes expected travel speeds may be used. The Link Data TIMs that may be generated by the interface computer may contain the link speed data in units of metres per second or feet per second. In one embodiment illustrative of the present invention, the TIMs contain locally referenced link LRs without street name information. In this arrangement, street name information is broadcast only with links for which the latitude and longitude of the beginning and ending points might be misinterpreted with nearby links. Point "lat, long, alt." data is also broadcast and not correlated to a link that does not occur on the link, such as a burglary in a parking lot. However, such incidents are maintained in a map display table and may or may not be used for route calculation.

The vehicle navigation unit 108 of Figure 1 may use the link speed information in many different ways. By way of example, vehicle navigation unit 108 receives the coordinates of the starting point, the coordinates of the end point and the real-time speed of each link and in response, the vehicle navigation unit executes an algorithm, which correlates the start and end points with a map database maintained internally within the vehicle navigation unit. The algorithm uses the street name information to resolve any ambiguity in map correlation. Next, vehicle navigation unit 108 associates the real-time speed data with the correlating elements of the internal map database. Finally, vehicle navigation unit 108 displays the real-time speed information and uses the information during route calculations.

As another example, vehicle navigation unit 108 is preprogrammed with a mapping table that associates links to elements within a map database, which is maintained internally within the unit. Vehicle navigation unit 108 receives the coordinates of the starting point, the coordinates of the end point and the real-time speed of each link and in response, the vehicle navigation unit uses the mapping to associate the real-time speed data with the correlating elements of the internal map database. Finally, the unit displays the real-time speed information and uses the information during route calculations.

### Route Generation

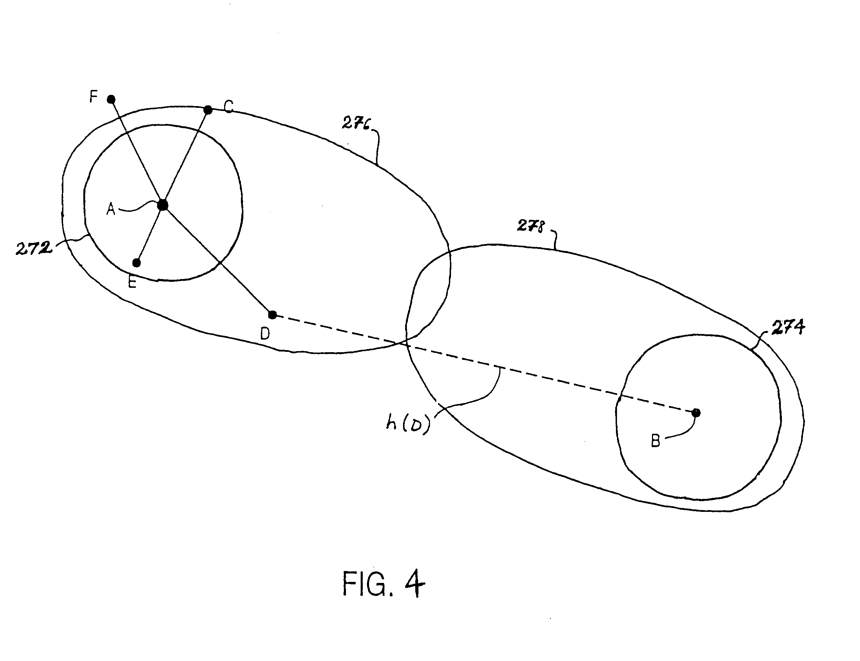

Advantage may be taken of the manner in which the map database is organized to generate efficiently the best route from a source location to a final destination. The determination of a route from a source location A to a final destination B using the vehicle navigation system of Fig. 2 will be described with reference to Fig. 4. In a particular arrangement illustrative of the invention, a vehicle navigation system 200 employs a two-ended route generation algorithm. That is, the system explores paths emanating from a source point A and paths leading backwards from destination point B. The two searches each generate a plurality of partial routes, two of which eventually meet somewhere between points A and B to form a single route.

Initially the search patterns emanate from both points A and B in all directions as indicated by circular regions 272 and 274. The diagram of Fig. 4 illustrates how one of four road segments emanating from point A is chosen for continued route exploration. Each road segment, n, has an associated segment cost, g(n), and each node, k, has associated node and heuristic costs, g(k) and h(k), respectively. The segment cost for each segment is added to the node and heuristic costs for its endpoint to obtain an overall cost value for each. The road segment having the lowest overall cost is then selected for further generation. In Fig. 4, the road segment terminating at point D is selected primarily because the heuristic cost associated with point D, i.e., the distance between points D and B, is less than the heuristic costs associated with points C, E, and F. This process is then repeated for point D and each newly generated route point thereafter. This has the effect of redirecting and narrowing the search area over the course of the route generation so that the search concentrates more on the area between points A and B as indicated by regions 276 and 278.

### Route Calculation Termination Count

In another particular arrangement illustrative of the invention, after a first route is generated using the technique described above (or any of a wide variety of route generation techniques), the system waits for one of two events to occur before termination of the route generation algorithm. One of the two events is the generation of a programmable number of routes between the source and the destination. For example, in one specific arrangement, the programmable route count is four. In this arrangement, once four routes have been generated, the system communicates the route with the lowest cost to the user. This is called the iteration termination count.

The other of the two events is when a parameter called the suppression limit count reaches zero. After the first route has been generated, the suppression limit count is decremented for each segment expansion executed by the route generation algorithm while searching for additional routes. The initial value of the suppression limit count may be set in a variety of ways according to various arrangements illustrative of the invention. In one arrangement, the initial suppression limit count is fixed at 500 segments. That is, the route generation algorithm expands at least one partial route an additional 500 segments before terminating its search. However, such a fixed initial count may not be appropriate for all route generation problems because it does not take into account the great variability in route lengths. For example, while a suppression limit count of 500 might be appropriate for a source and a destination which are 2 miles apart, it will likely be insufficient for a source and destination which are 25 miles apart. In addition, an initial count which is appropriate for a sparsely digitized area (e.g., a rural region), may not provide a sufficient number of additional segments for expansion in a densely digitized area (e.g., a downtown urban region).

Thus, according to two alternate embodiments, the initial value of the suppression limit count may be variable. In a first possible arrangement, the initial count is dependent upon the distance between the source and the destination locations. That is, the greater the distance between the source and destination, the higher the initial count is set. In a second possible arrangement, the initial count is dependent upon the number of segment expansions required to generate the first route. That is, the greater the number of segments in the first generated route, the higher the initial count is set. In this way, the initial suppression limit count may be tailored to each specific route generation problem.

Any of the route calculation termination count arrangements described above may be further enhanced such that the count is decremented by a bonus amount each time an additional route from the source to destination is generated. For example, in addition to decrementing the count by one for each segment expansion, it may also be decremented by, for example, 50 for each route generated after the first route. Thus, as the number of generated routes increases and the need for further searching correlatively decreases, the suppression limit count is adjusted to reflect this. In particular arrangements, the bonus amount by which the count is adjusted may vary according to the distance between the source and the destination, or the number of segments in the first generated route.

### Variable Segment Costs

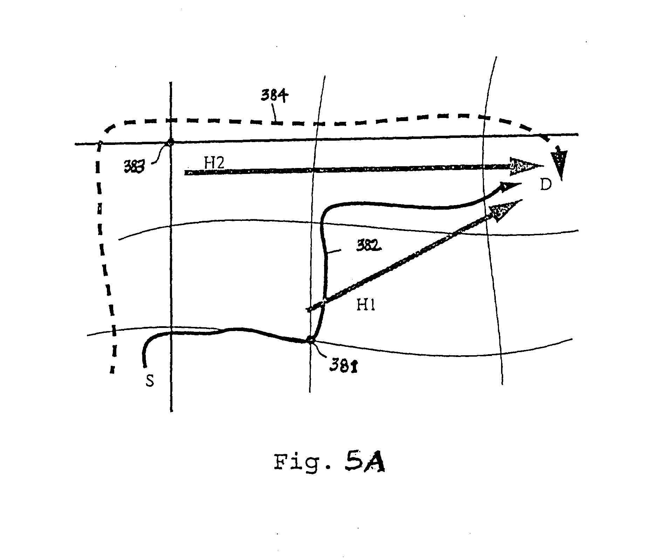

The above-described route generation method may be enhanced to address the problem illustrated by Fig. 5A. Because the heuristic cost at node 381 (represented vector H1) is less than the heuristic cost at node 383 (represented by vector H2), route 382 is more likely to be generated than route 384. This occurs even where route 384 is an obviously superior route, e.g., because it primarily comprises road segments of rank 3, i.e., freeways. Therefore, in this particular arrangement illustrative of the invention, heuristic costs are dynamically adjusted and weighted to favour the use of higher rank road segments in the generation of a route. For example, in one arrangement, the heuristic cost for a particular node is determined by multiplying the distance between the node and the destination by a constant corresponding to the rank of the associated road segment. The constants associated with the ranks increase in value from the highest to the lowest rank, thereby favouring the higher rank segments. In another arrangement, heuristic costs are dynamically adjusted and weighted to favour the use of road segments based on their importance.

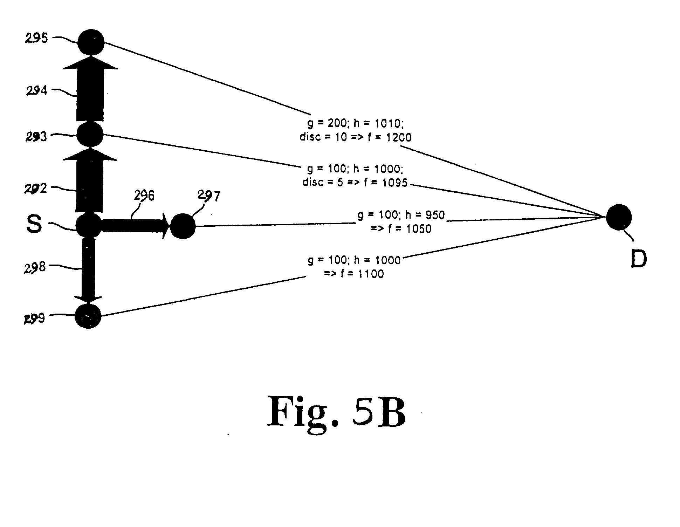

Manipulation of the heuristic or h cost may not be particularly useful where the destination is very far from the source (e.g., 300 miles) because, where the manipulation includes multiplying the h cost by some constant (e.g., 0.9), the size of the h cost in comparison with the g cost (e.g., h = 20,000 vs. g = 100) may result in disproportionate adjustment of the total segment cost f, i.e., g + h. Therefore, according to a more specific arrangement illustrative of the invention, the segment cost f is adjusted to favour the use of higher rank segments by the introduction of a discount value which is calculated as a percentage of the route g cost up to that point. Fig. 5B shows four road segments emanating from a source S. The larger segments 292 and 294 represent freeway segments. The smaller segments 296 and 298 represent surface street segments. The f cost associated with each segment and the components thereof are given on the line connecting the associated end point node and the destination d. So, for example, the f cost for segment 296 is the g cost (100), plus the h cost (950) as determined by the distance between node 297 and D. This yields a total of 1050. Likewise, for segment 298 and node 299, the f cost is 1100. However, because segments 292 and 294 (and the associated nodes 353 and 355) are part of a freeway, the f cost is decreased by a 5% discount. Of course, the discount could be any of a range of values without departing from the scope of the protection sought by the claims appended hereto. In any case, as shown in Fig. 5B, the f costs associated with segments 292 and 294 are 1095 and 1200, respectively. It will be understood that in the example of Fig. 5B that the route generation algorithm would initially favour segment 296, because it has the lowest f cost. However, it will also be understood that, as the algorithm expands each of three directions, the discount associated with the freeway route (which includes segments 292 and 294) will increase as the cumulative g cost for that route increases. Therefore, the algorithm may eventually reach a point at which the f cost for the freeway route is less than the f cost for the route beginning with segment 296. In this way, as the route generation algorithm gets farther from the source location, it will tend to favour the route having more higher rank segments. For more information on route generation, reference may be made to the US patent application entitled "Route Generation In A Vehicle Navigation System," naming Haruhisa Tamai as an inventor, patent application number 08/784,204, filed on January 15, 1997, which is a continuation-in-part of U.S. Patent No. 5,712788 filed on February 9, 1995.

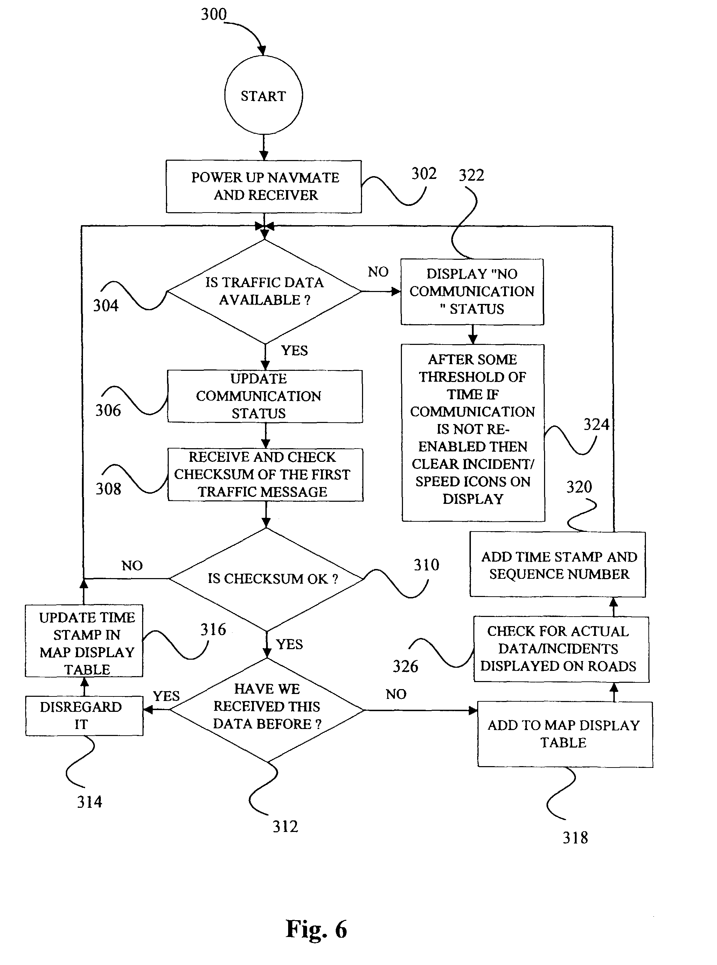

Figure 6 is a flowchart which illustrates a process 300 for updating, in one arrangement illustrative of the present invention, real-time traffic data as it is received by a vehicle navigation unit through a receiver from a transmitter. Process 300 may begin when a vehicle navigation system (referred to as "NAVMATE" in Figure 6) and a receiver, e.g., a STIC receiver, is activated in a step 302. In this step, the receiver begins to receive the broadcast traffic data from a transmitter, e.g., a STIC transmitter. In a step 304, an enquiry is made as to whether traffic data is being received or not. In one arrangement, the enquiry of step 304 is made periodically (e.g., once a minute). Next, if it is determined that traffic data is indeed being received, then in a step 306, the communication status on a display unit of the vehicle navigation unit is updated. By way of example, a user is apprised that traffic data is being received by presenting an icon labelled "TI" (which abbreviation suggests "traffic incident") in green colour on the display unit. If, however, it is determined that traffic data is not being received, then in a step 322, the display unit indicates that no traffic data is being received. This may be accomplished by displaying the icon labelled "TI" in red colour, for example. If after a predetermined threshold of time elapses and communication is not reenabled, then the speed and incident icons are cleared from display as indicated by step 324.

A step 308 includes receiving and checking a checksum of the traffic message. In a step 310, an enquiry is made as to whether the checksum is acceptable or not. If it is determined that the checksum is not acceptable, then process 300 proceeds to the step 304 described above. If, however, it is determined that the checksum is acceptable, then process 300 proceeds further to a step 312, where an enquiry is made as to whether the traffic data was received previously, or if the traffic data is a duplicate. As mentioned above, the inquiry in step 312 is made by checking the sequence number associated with the frame of traffic data, for example. If the traffic data was received before, then the traffic data is disregarded, according to a step 314, and a time stamp in the map display table is updated in a step 316. The time stamp is associated with each link or frame of data that is being received by the receiver. In step 316, data for a certain link may be received by the vehicle navigation unit and the time stamp may be recorded to apprise the driver or user that the data for that link is indeed being received. In the event, however, the data for a certain link has not been received within three minutes, for example, then that data is removed from the tables and display. After the conclusion of step 316, process 300 goes back to step 304 described above.

If it is determined that the traffic data was not received previously because the sequence number for that link or frame of data is new, for example, then the traffic data is added to the map display table, as indicated by a step 318 of Figure 6. The newly received traffic data may also be stored in a memory storage area that is connected to the vehicle navigation unit. Step 326 may be performed as an optional filter and includes checking whether the actual speed data and road incidents displayed on roads are consistent with the broadcast real-time speed data and road incidents. By way of example, if a "16 mile scale" is drawn showing freeways and expressways without showing the lower class roads, then traffic information is shown and checked on the freeway/expressway roads and not shown and checked on the free space where roads are not drawn. In this step, traffic information such as 911 emergency incidents may still be drawn and checked in the free space because the incident might have been in a parking lot. Upon the conclusion of a step 320, which includes adding the time stamp and sequence number for the new traffic data, the process 300 goes back to the step 304 to receive more traffic data. In this manner, new traffic data is added to the map display table and the time stamp for duplicate traffic data is updated to reflect that a link is being updated. This feature of the arrangement being described allows the receiver to receive speed information for all links on the map display and the processing of this large volume of link speed data is facilitated by the process described above.

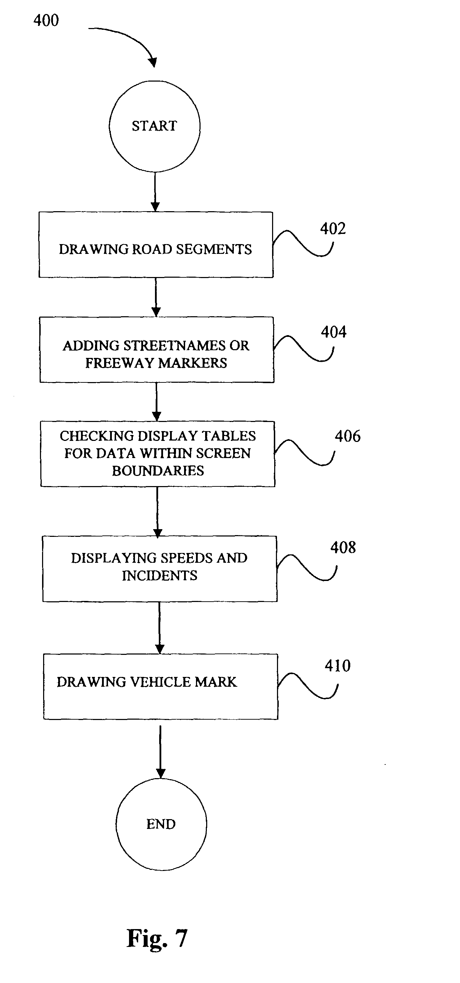

Figure 7 shows a flowchart of a process 400 for generating, according to one arrangement illustrative of the present invention, a map display that periodically apprises the user of the real-time traffic data. The map display generated by this process may be shown on the display unit of the vehicle navigation unit. In one particular arrangement illustrative of the invention, the vehicle navigation system display employs "double buffering" in which a first GUI presents map display information as a background. The map display information includes, for example, the map grid itself along with street names and freeway markers. A second GUI is superimposed over the first and presents the traffic data information in the foreground. For more information on double buffering, reference may be made to a U.S. Patent No.5,371,497 issued to Aisin AW Co., Ltd. In this arrangement, the user has the option of shutting off the display of real-time traffic data by turning off the second GUI and thereby obtaining a clearer view of the map display.

Steps 402 and 404 include drawing road segments and adding street names or freeway markers, respectively. As mentioned above, the information displayed in steps 402 and 404 may be stored on a CD-ROM. By way of example, in order to facilitate the driver or user from distinguishing different types of roads from each other, a general street, a major street, a freeway and a suggested route are all displayed in different colours. In a step 406, the relevant display tables are checked for data within screen boundaries. The real-time traffic speed and road incidents are represented on the map display in a step 408. By way of example, the real-time speed of a road segment may be indicated by different coloured dots that are positioned along that road segments or by highlighting the road segment in different colours. The different colours may indicate different ranges of speed on the road segment. In this way, the user is apprised of the degree to which slowing has occurred on a road segment due to unanticipated road incidents or traffic. Displayed road incidents may include icons to show maintenance, traffic accident, road closure, 911 incident phone calls, road conditions, event information (e.g., traffic conditions relating to sporting events or concerts), the presence of debris, hazardous driving conditions on the road due to weather and the like. In one arrangement, the process 400 includes drawing a vehicle icon on the map display, as indicated by a step 410. It should be borne in mind that the process 400 described above is not limited to any specific order and may be carried out in several different orders.

The map display generated by the above-described process on a vehicle navigation unit's display unit may have several features not mentioned above. By way of example, the map display table may be presented to the user in different zoom scale settings. In a lowest zoom scale setting, for example, the most detailed view of the map is presented to the user. The most detailed view of the map may include all roads along with their road names and freeways with freeway labels. In a next higher zoom scale setting, the map display includes all major roads with road names and freeway labels. On this zoom scale setting, some street names appear when the names can be displayed clearly. In a next higher zoom scale setting, all roads along with freeway labels are indicated on the map display. In a second highest zoom scale setting, the map display includes only expressways and freeways with freeway labels. In the highest zoom scale setting, which represents the least detailed view of the map display, the map display includes only freeways with freeway labels.

As another example, the vehicle navigation redraws the map at different instances during travelling. In one instance, the map is rotated such that the vehicle icon shows the vehicle heading upward and forward. In another instance, the map is redrawn when the vehicle icon approaches the edge of a current map screen to show more clearly relevant road segments. In yet another instance, the map display is redrawn when the vehicle turns 90 degrees.

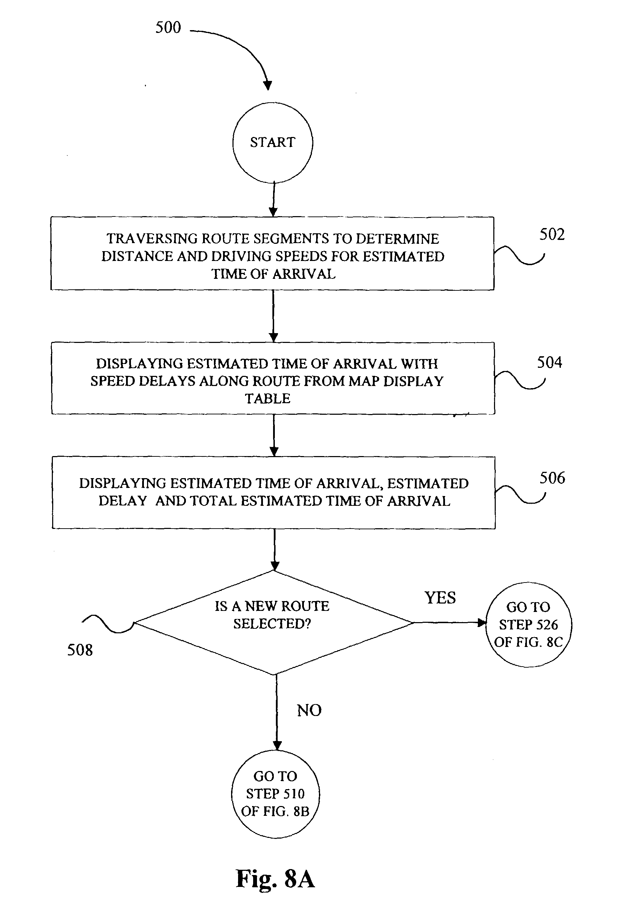

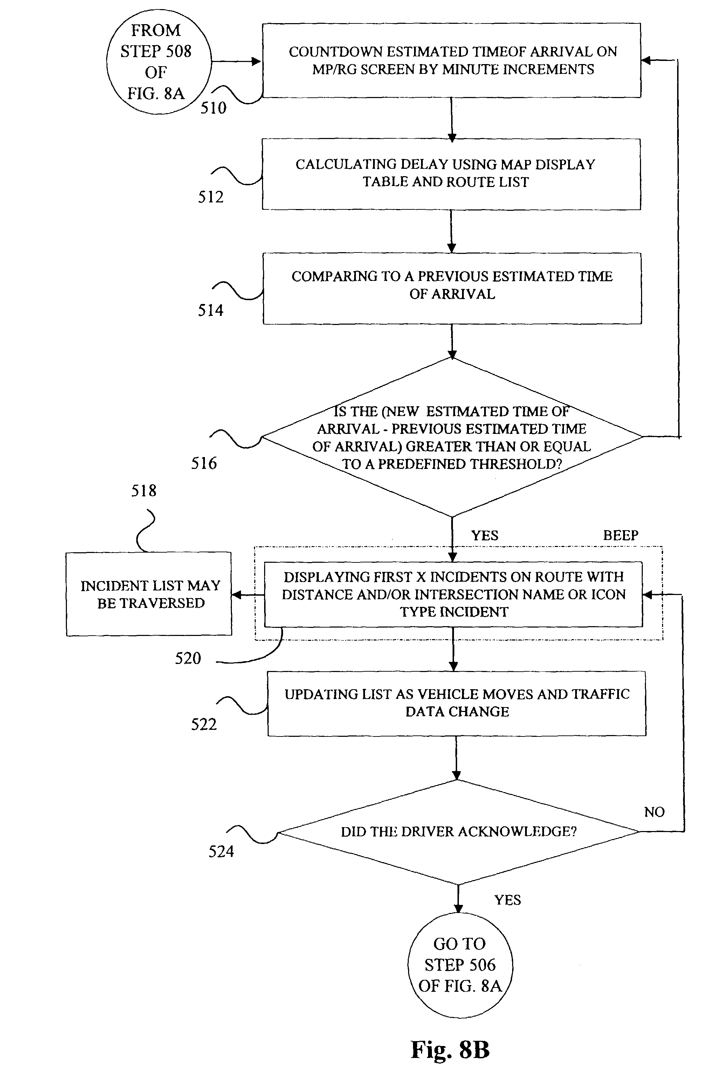

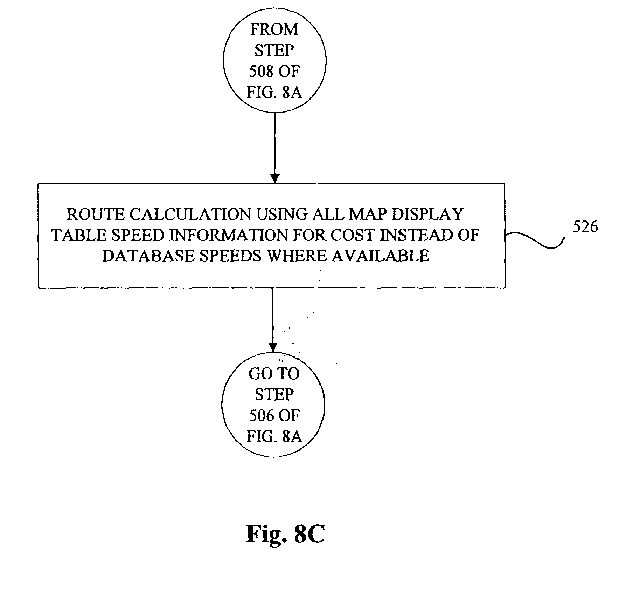

When the driver departs from a point of origin to a selected destination, the vehicle navigation unit provides the fastest route based on the traffic conditions at or near the time of departure. However, after the vehicle has travelled on that route for a certain amount of time, delays on the current route or neighbouring routes due to the occurrence or clearing of road incidents may result in the current route no longer being the fastest route to the selected destination. Therefore, in one arrangement illustrative of the present invention a process 500, provides, as detailed in Figures 8A-8C for estimating the time of arrival at the selected destination based on real-time traffic data. As may be seen from Figures 8A-8C, if there is a delay on the fastest route, then the process 500 apprises the user of the reasons for the delay and the estimated period of time of delay. Alternatively, if a delay is cleared on the driver's route, then he is informed that the estimated time of arrival may be sooner. Additionally, the vehicle navigation unit also provides the user with the option of picking another "fastest" route to the selected destination based on broadcast real-time traffic data.

Process 500 may begin at step 502, which includes traversing road segments on a route undertaken to determine distance and driving speeds for the calculation of the estimated time of arrival. The route undertaken may be a "fastest" route using route calculation criteria (e.g., "LEAST USE OF FREEWAY," "AVOID TOLL ROADS," etc.) to the destination, based on the traffic conditions at or near the time of departure. Steps 504 and 506, which may be carried out simultaneously, include displaying an estimated time of arrival with speed delays along the route from the map display table and displaying estimated time of arrival, estimated delay and total estimated time of arrival for the route undertaken, respectively. In step 506, the estimated time of arrival may be the time of arrival on the fastest route that is estimated based on the traffic conditions at or near the time of departure to the destination. In arrangements described, the estimated time of arrival of step 506 reflects the normal speed of the traffic on that route without any road incidents, or it is calculated using the predetermined speed data that is stored in the database. Estimated delay refers to the delay on the fastest route due to road incidents, for example, and the total estimated time of arrival is calculated by adding the estimated delay to the estimated time of arrival. Thus, as the flow of traffic on a route is impeded by the presence of unanticipated road incidents, the estimated delay and the total estimated time of arrival for that route also increases.

In the process 500, the user may be provided with the option of selecting a new route, if the user wishes to circumvent an unanticipated road incident on his route. In a step 508, an enquiry is made as to whether the user has selected a new route. If it is determined that the user has selected a new route, then process 500 proceeds to step 526 of Figure 8C. In step 526, route calculations and cost computations based on real-time traffic data are performed as described above to arrive at the fastest route to the destination. For those road segments where the real-time traffic data are not available or the speed is not monitored, a predetermined speed stored in the vehicle navigation unit's database, or the interface computer, for example, is used. The predetermined speed may be either the posted speed limit on the road segments, or it may take account of known road incidents, like the traffic resulting from a sporting event that is over at a certain time. If, however, it is determined that the user has not selected a new route in step 508 of Figure 8A, then process 500 advances to step 510 as shown in Figure 8B, which is described hereinafter.

Step 510 includes counting down the estimated time of arrival on the vehicle navigation unit's display screen, for example, by minute increments as the vehicle progresses on the route towards the destination. A step 512 includes calculating an estimated delay and a new estimated time of arrival using the map display table and the route list. Step 512 is carried out periodically (e.g., every one minute). The route list primarily contains the links of a given route and corresponding information to calculate the estimated time of arrival and delay using the broadcast real-time traffic data of those links. Consequently, the new estimated delay computed in step 512 reflects the current state of traffic on the route. In a step 514, the new estimated time of arrival computed in step 512 is compared to the estimated time of arrival computed previously in step 510.

A step 516 includes inquiring whether the previous estimated time of arrival subtracted from the new estimated time of arrival is greater than or equal to a predefined value. If it is determined that the previous estimated time of arrival subtracted from the new estimated time of arrival is not greater than or equal to a predefined value, then process 500 goes back to step 510 described above. If it is determined, however, that the previous estimated time of arrival subtracted from the new estimated time of arrival is greater than or equal to a predefined value, then process 500 advances to a step 520.

Alternatively, in step 516 an enquiry may be made as to whether the new estimated time of arrival exceeds a predetermined threshold and process 500 may proceed depending on the determination in step 516. If the estimated time of arrival is reduced significantly, then that information is also provided to the user.

In step 520, a traffic incident message may be displayed by the vehicle navigation unit. The traffic incident message may include a list of a certain number of road incidents on the route. The road incident list displayed in step 520 may be accompanied by the distance of occurrence and/or the intersection name of each road incident or icon related to each road incident type. In one embodiment, the traffic incident message is accompanied by an audible warning, e.g., a "beep", or an alert signal that alerts the user to look at the traffic incident message displayed on the screen. In step 518, the list of traffic incidents is traversed by the user to locate a road incident of interest. In a step 522, the list of traffic incidents is updated to include the broadcast real-time traffic data as the vehicle moves towards the destination.

An enquiry may be made at step 524 as to whether the driver has acknowledged the traffic incident message of step 520. The vehicle navigation unit includes a button, for example, that the driver may depress to acknowledge the presence of the traffic incident message on the screen. If the user has not acknowledged the traffic incident message, then process 500 goes back to step 520 and the system continues to present the traffic incident message. If the user, however, does acknowledge the traffic incident message, then process 500 advances to step 506.

Process 500 may be carried out in a number of ways that are different from the arrangement described above. As mentioned before, the estimated time of arrival that is determined initially is modified in response to the changing traffic conditions as the vehicle progresses on a route towards the destination to produce a new estimated time of arrival. In another arrangement, if the new estimated time of arrival at or new travel time increases beyond a predetermined threshold, then the vehicle navigation unit provides the user with a new "fastest" route. It is important to note that the term "travel time" refers to the period of time, e.g., 1 hour, required to traverse a route and the term "estimated time of arrival" refers to an approximate time, e.g., 8:00 p.m., when the vehicle reaches the destination. In this arrangement, the predetermined threshold is either a constant value or changes depending on the initial estimated time of arrival or the travel time determined with reference to an initial estimated time of arrival. The initial estimated time of arrival is calculated at or near to the time of departure from a point of origin, for example. By way of example, if the initial estimated time of arrival is 8:00 p.m. and the initial travel time is 1 hour, then the user may be provided with a plurality of routes when the vehicle has travelled half way on the "fastest" route and the new estimated time of arrival due to an unanticipated road incident exceeds a predetermined threshold (for the estimated time of arrival) that is 8:30 p.m., or alternatively when the new travel time exceeds the predetermined threshold (for the travel time) of 1 hour.

It is important to bear in mind that at least some steps of the arrangements that have been described in illustration of the present invention may be implemented by an audio signal over a speaker system. By way of example, displaying traffic incident message, estimated time of arrival and delay, selecting a new route, etc. may be carried out by providing the appropriate instruction on a sound system. The vehicle navigation system may also be a voice activated system, which is capable of communicating instructions in response to the user's voice commands.

While particular arrangements have been described, by way of example in illustration of the invention, it will be understood that variations and modifications thereof, as well as other arrangements may be conceived with the scope of the protection sought by the appended claims.

It will be understood that the actual speed data, for example, may also be a speed range such as 20-30 miles per hour or 40-50 miles per hour or further still indicate a positive or negative deviation from the normal speed limit or an exact speed such as 45 miles per hour.

## Claims

1. A method for generating a fastest route, in a vehicle navigation system, including the steps of receiving a broadcast signal that provides actual speed data for a plurality of road segments, each of the plurality of road segments having a length, and selected ones of the plurality of road segments combining to form at least part of a plurality of routes from a position to a destination, generating the plurality of routes using the actual speed data,
determining a travel time for each of the plurality of routes using the actual speed data, and selecting the fastest route from the plurality of routes based at least in part on the travel times.

2. The method as claimed in claim 1, wherein the step of receiving a broadcast signal includes receiving one of an FM broadcast signal, or a cellular broadcast signal.

3. A method as claimed in claim 1, wherein the step of receiving a broadcast signal includes receiving road incident data for at least some of the road segments.

4. A method as claimed in claim 3, wherein the road incident data includes information regarding road closures, accidents, detours, 911 emergency phone calls, event information, parking capacity, the presence of debris and hazardous weather conditions.

5. A method as claimed in claim 3, including displaying a map display table that includes representations of a subset of the plurality of road segments, the actual speed data and road incidents associated with the road segments.

6. A method as claimed in claim 1, wherein generating the plurality of routes occurs in response to the selection of a new route by a user of the vehicle navigation system.

7. A method as claimed in claim 1, including updating the travel time associated with the fastest route at a first location on the fastest route to produce a new travel time, and generating a second plurality of routes when the new travel time exceeds a predetermined threshold.

8. A method as claimed in claim 7, wherein the predetermined threshold is determined with reference to an originally estimated time of arrival.

9. A method as claimed in claim 8 wherein the predetermined threshold is also determined with reference to the first location.

10. A method as claimed in claim 8, including the step of presenting a traffic incident message when the new travel time exceeds the predetermined threshold, the traffic incident message including a representation of at least one traffic incident.

11. A method as claimed in claim 1, wherein the step of determining the travel time includes using predetermined actual speed data which is stored in a database that is coupled to the vehicle navigation system and is different from the actual speed data.

12. A method as claimed in claim 1, including the steps of determining whether a message in the broadcast signal was previously received, discarding the message if the message had previously been received, and saving the message on a memory storage area coupled to the vehicle navigation system if the message had not previously been received.

13. A vehicle navigation system, including means for receiving a broadcast signal that provides actual speed data for a plurality of road segments, each of the plurality of road segments having a length, and selected ones of the plurality of road segments combining to form at least part of a plurality of routes from a position to a destination, means for generating the plurality of routes using the actual speed data, means for determining a travel time for each of the plurality of routes using the actual speed data, and means for selecting the fastest route from the plurality of routes based at least in part on the travel times.

14. A vehicle navigation unit, including a receiver, a storage medium, and a processor coupled to the receiver and the storage medium, the arrangement being operable to receive a broadcast signal that provides actual speed data for a plurality of road segments, each of the plurality of road segments having a length, and selected ones of the plurality of road segments combining to form at least part of a plurality of routes from a position to a destination, to generate the plurality of routes using the actual speed data, to determine a travel time for each of the plurality of routes using the actual speed data, and to select the fastest route from the plurality of routes based at least in part on the travel times.
